# EUROPÄISCHE PATENTSCHRIFT

(11) **EP 2 326 685 B1**
(45) Veröffentlichungstag und Bekanntmachung des Hinweises auf die Patenterteilung: **31.10.2012**
(21) Anmeldenummer: 09778539.8
(22) Anmeldetag: 16.09.2009
(51) Int. Cl.: C08J 9/00, C08L 25/06

(54) **KÖRPER, INSBESONDERE FORMKÖRPER AUS POLYSTYROL**
BODY, PARTICULARLY MOLDED BODY MADE OF POLYSTYRENE
CORPS, EN PARTICULIER CORPS MOULÉ EN POLYSTYRÈNE

(30) Priorität: 17.09.2008 DE 102008047594
(43) Veröffentlichungstag der Anmeldung: 01.06.2011
(73) Patentinhaber: H.C. Carbon GmbH, 90461 Nürnberg (DE)
(72) Erfinder: HANDL, Werner, 90518 Altdorf (DE)
(74) Vertreter: Förster, Susanne
(86) Internationale Anmeldenummer: PCT/EP2009/006677
(87) Internationale Veröffentlichungsnummer: WO 2010/031537

(56) Entgegenhaltungen:
- DATABASE WPI Week 198546 Thomson Scientific, London, GB; AN 1985-287708 XP002553268 & JP 60 199062 A (NIPPON OILS & FATS CO LTD) 8. Oktober 1985 (1985-10-08) -& DATABASE EPODOC EUROPEAN PATENT OFFICE, THE HAGUE, NL; XP002554763 & JP 60 199062 A (NIPPON OILS & FATS CO LTD) 8. Oktober 1985 (1985-10-08)
- DATABASE WPI Week 198733 Thomson Scientific, London, GB; AN 1987-233349 XP002553246 & SU 1 278 343 A1 (MAGN MIN-METAL INST) 23. Dezember 1986 (1986-12-23)

## Beschreibung

Die Erfindung betrifft einen Körper, insbesondere einen Formkörper aus Polystyrol, insbesondere aus Polystyrolpartikelschaum oder Polystyrolhartschaum.

Beim expandierten Polystyrolpartikelschaum (EPS) wird Polystyrolgranulat (Polystyrol-Gries), in welches das Treibmittel Pentan einpolymerisiert ist, mit Temperaturen über 90°C vorgeschäumt. Durch die Temperatur verdampft das Treibmittel und bläht das thermoplastische Grundmaterial bis auf das 20- bis 50-fache zu PS-Schaumpartikeln auf. Aus diesem werden dann in diskontinuierlich oder kontinuierlich arbeitenden Anlagen durch eine zweite Heißdampfbehandlung zwischen 110°C und 120°C Blöcke, Platten oder Formteile hergestellt.

Polystyrol-Extruderschaum, oder extrudierter Polystyrolhartschaum (XPS) wird in einem kontinuierlichen Extrusionsprozess hergestellt: Treibmittelfreies Polystyrol-Granulat wird in einem Extruder aufgeschmolzen und unter Zugabe von Treibmittel über eine Breitschlitzdüse kontinuierlich ausgetragen. Der entstehende Schaumstoff ist homogen und geschlossenzellig und kann als Blöcke, Platten oder Formteile hergestellt werden.

Solche Schäume sind seit über 50 Jahren bekannt und werden aufgrund ihrer Eigenschaften als Dämmstoffe, insbesondere zur Wärmedämmung in der Bauindustrie eingesetzt.

Zur Wärmedämmung eingesetzte Formkörper haben meist Rohdichten von unter 20 kg/m³. Zur Material- und Volumenreduzierung besteht die Forderung, die Rohdichte weiter zu reduzieren. Derartig geringe Dichten haben jedoch deutlich schlechtere Wärmedämmwerte. So liegt die Wärmeleitfähigkeit meist über 45 mW/m·K.

Um diesen Mangel zu beseitigen, wurden zahlreiche Verfahren vorgeschlagen.

Beispielsweise wird in der EP0620246 der Einsatz athermaner Materialien in Polystyrolschäumen vorgeschlagen. Dabei sollen die athermanen Materialien auch Infrarotstrahlen absorbieren. Als athermane Materialien werden Metalloxid, Nichtmetalloxid, Metallpulver, Aluminiumpulver, Kohlenstoff oder organischer Farbstoff insbesondere in Form von Pigmenten oder Mischungen aus diesen Materialien vorgeschlagen. Nach der Definition ist atherman [griechisch], adiatherman, wärmeundurchlässig: die Eigenschaft von Körpern, Wärmestrahlung nicht hindurchzulassen, sondern sie zu absorbieren; Gegensatz: diatherman. Diese Eigenschaft trifft nicht auf Metallpulver und Kohlenstoff zu. Die dort genannten Kohlenstoffe wie Ruß, Graphit und Diamant haben zwar eine gewisse Infrarotabsorption, doch sind sie aufgrund ihrer Oberflächenstruktur nicht in der Lage, einen Großteil der Wärmestrahlung zu reflektieren.

In der WO/97/45477 wird vorgeschlagen, in expandierte Styrolpolymerisate Rußpartikel einzuarbeiten. Hierbei soll nicht nur die Wärmedämmung, sondern vor allem das Brandverhalten entscheidend verbessert werden. Entscheidender Nachteil bei diesem Verfahren ist die hohe spezifische Oberfläche der Rußpartikel. In der Regel liegen Rußpartikel bei über 100 m²/g nach BET. Derartig hohe Oberflächen absorbieren die zusätzlich nötigen Flammschutzmittel und verschlechtern das rheologische Verhalten bei der Verarbeitung. Die beanspruchte Teilchengröße der Rußpartikel von 80 bis 120 nm ist im Infrarotbereich ohnehin unwirksam.

Nach der Lehre der WO/98/51734 sollen Graphitpartikel in expandierbare Styrolpolymerisate eingebracht werden. Der eingesetzte Graphit hat vorzugsweise eine mittlere Partikelgröße von 1 - 50 µm, insbesondere von 2,5 - 12 µm, ein Schüttgewicht von 100 - 500 g/l und eine spezifische Oberfläche von 5 - 20 m²/g. Es wird Naturgraphit oder gemahlener synthetischer Graphit vorgeschlagen. Es soll damit bei einem Polystyrolschaum der Dichte 10 g/l eine Senkung der Wärmeleitfähigkeit von 44 mW/m·K auf unter 35 mW/m·K erreicht werden. Nachteil dieses Verfahrens ist, dass durch den Einsatz von Graphit zwar eine Reduzierung der Wärmeleitfähigkeit erzielt wird, aber aufgrund der guten intrinsischen Wärmeleitung des Graphits eine Grenze erreicht wurde. Zudem kann Graphit nicht höher dosiert werden, da durch das Erreichen der Perkolationsschwelle eine Verschlechterung eintreten würde.

Gemäß der WO/00/43442 wird vorgeschlagen, zur Verbesserung der Wärmedämmeigenschaften Aluminiumteilchen einzusetzen. Aluminiumteilchen können Infrarotstrahlen zwar dämmen, doch sind die vorgeschlagenen Teilchengrößen zwischen 1 und 15 µm sehr gefährlich. Bei der Verarbeitung ist die Gefahr von Staubexplosionen gegeben und im Endprodukt werden die geforderten Brandschutzwerte nicht erreicht. Zudem ist der Einsatz bei einer wässrigen Suspensionspolymerisation aufgrund von Wasserstoffbildung nicht möglich.

DATABASE WPI Week 198546 Thomson Scientific, London, GB; AN 1985-287708 XP002553268 & JP 60 199062 A (NIPPON OILS & FATS CO LTD) 8. Oktober 1985 (1985-10-08) offenbart eine Harzzusammensetzung aus Polystyrol und 5 bis 50 Teilen Koks. Außerdem ist Petrolkoks mit einem Durchmesser von 10 bis 95 µmeter erwähnt.

Die Aufgabe der Erfindung besteht darin, einen Körper, insbesondere einen Formkörper aus Polystyrol, insbesondere aus Polystyrolpartikelschaum oder Polystyrolhartschaum, zur Verfügung zu stellen, der die Wärmedämmung deutlich verbessert, den Einsatz von Flammschutzmitteln reduziert und der zudem einfach in allen Schaumverfahren zu verarbeiten ist.

Die vorstehende Aufgabe wird durch die gesamte Lehre des Anspruchs 1 gelöst. Vorteilhafte Ausgestaltungen der Erfindung ergeben sich aus den Unteransprüchen 2 - 12.

Gemäß der Erfindung enthält der Körper, insbesondere der Formkörper aus Polystyrol, insbesondere aus Polystyrolpartikelschaum oder Polystyrolhartschaum, kalzinierten Petrolkoks, insbesondere kalzinierte Petrolkoks-Teilchen, wobei die Petrolkoks-Teilchen oder mindestens ein Teil der Petrolkoksteilchen eine plättchenförmige Kornform aufweisen. Insbesondere wird gemahlener, kalzinierter Petrolkoks verwendet. Petrolkoks stellt einen neuartigen Infrarotblocker dar und weist damit eine verbesserte Wärmedämmung auf. Diese verbesserte Wärmedämmung stellt sich sowohl bei den Körpern aus EPS (Polystyrolpartikelschaum) als auch bei denen aus XPS (Polystyrolhartschaum) ein.

Petrolkoks ist ein Rückstand der Erdöldestillation und entsteht in so genannten Crackern. Durch die Kalzinierung wird der Petrolkoks von flüchtigen Bestandteilen befreit und man erhält dadurch Reinheitsgrade von 99 % Kohlenstoff. Petrolkoks kann damit als Kohlenstoff angesehen werden, zählt jedoch nicht zu den allotropen Formen. Kalzinierter Petrolkoks ist weder Graphit, da er keine verschiebbaren Schichten besitzt, noch kann er zu den amorphen Kohlenstoffen wie Ruß gezählt werden. Beispielsweise besitzt Petrolkoks gegenüber Graphit keine typische Schmierwirkung und eine nur schlechte elektrische und thermische Leitfähigkeit.

Nach dem Stand der Technik werden je nach Herstellungsmethode bzw. Kokerbedingungen anisotrope oder isotrope Kokse erzeugt. Diese Kokse, so genannte Petrolkokse, werden durch Hitzebehandlung, meist in Drehrohröfen von flüchtigen Bestandteilen befreit. Dieser Vorgang wird auch als Kalzinierung bezeichnet. Die kalzinierten Koksstücke werden je nach Anwendung zu kleinen Stücken gebrochen oder in Hammermühlen zu Pulvern gemahlen. Die Petrolkokse werden fast ausschließlich zur Herstellung von Elektroden oder in der Stahlindustrie als Aufkohlungsmittel verwendet.

Gemäß der vorliegenden Erfindung wurde nun gefunden, dass mit speziellen Mühlen kalzinierte Petrolkokse zu plättchenförmigen Pulvern gemahlen werden können und dass diese Petrolkokse wie Metall- oder Graphitplättchen in Styrolschäumen die Wärmedämmung verbessern.

Für den Einsatz von Petrolkoksen als Infrarotblocker in Polystyrolhartschäumen sind sowohl isotrope als auch anisotrope Kokse geeignet. Besonders bevorzugt sind anisotrope Kokse, so genannte Nadelkokse. Zur Verwendung als Infrarotblocker ist neben der Korngröße auch die Kornform von Bedeutung. Insbesondere zeigt eine plättchenförmige Kornform besonders gute Wärmedämmwerte. Gemäß der Erfindung werden solche bevorzugte Kornformen mit delaminierend arbeitenden Mühlen hergestellt. Solche Mühlen sind z.B. Kugelmühlen oder Luftstrahlmühlen. Die erfindungsgemäßen Petrolkokse weisen ein besonders hohes Aspektverhältnis auf. In der vorliegenden Erfindung ist unter Aspektverhältnis das Verhältnis der gemittelten Durchmesser zu gemittelten Dicken der Teilchen gemeint.

Eine erfindungsgemäß bevorzugte Korngröße ist der Bereich zwischen 1 und 50 µm. Vorzugsweise werden Petrolkokse mit einem mittleren Teilchendurchmesser zwischen 1 und 10 µm eingesetzt.

Die erfindungsgemäßen Petrolkokse haben ein Aspektverhältnis zwischen 1 und 500, vorzugsweise zwischen 5 und 50.

Es hat sich gezeigt, dass bei der Verwendung von gemahlenen Petrolkoksen nicht nur die Wärmedämmwirkung erheblich verbessert wird, sondern dass auch die Menge an Flammschutzmittel deutlich reduziert werden kann. Die als Flammschutzmittel verwendeten, meist halogenierten Produkte sind relativ teuer, so dass die erfindungsgemäßen Formkörper mit Petrolkoks deutlich billiger und auch umweltfreundlicher hergestellt werden können.

Vorteilhafterweise kann der Petrolkoks in einer Menge von 0,5 Gew.% - 10 Gew.% bezogen auf den fertigen Körper bzw. Formkörper enthalten sein, so dass sich die entsprechend reduzierte Wärmeleitfähigkeit einstellt.

Vorteilhafterweise kann der Formkörper eine Dichte von weniger als 40 kg/m³ aufweisen.

Der Körper kann eine Wärmeleitzahl von 20 - 40 mW/(m·K), insbesondere von 25 - 30 mW/(m·K), aufweisen. Diese Wärmeleitzahl ist im Vergleich zur Wärmeleitzahl des entsprechenden Körpers ohne Petrolkoks deutlich reduziert, wodurch sich auch entsprechend bessere Wärmedämmwerte einstellen.

Die Wärmeleitfähigkeit des Körpers mit Petrolkoks im Vergleich zu einem entsprechenden Körper ohne Petrolkoks kann um 25 % - 35 % reduziert sein.

Die Erfindung wird nun, ohne dass der Erfindungsgedanke eingeschränkt wird, anhand einiger Beispiele näher erläutert.

### Beispiel 1

Polystyrol mit einem Molekulargewicht von ca. 220.000 g/mol wurde in einem Extruder zusammen mit 2,5 Gew.% kalziniertem Petrolkoks, hergestellt auf einer Kugelmühle, mit einem mittleren Teilchendurchmesser von 3,5 µm und einem Aspektverhältnis von 20 sowie mit 0,8 Gew.% Hexabromcyclododecan und 0,1 Gew.% Dicumyl aufgeschmolzen, mit 6,5 Gew.% Pentan versetzt und auf etwa 120°C abgekühlt. Die so erhaltene Mischung wurde durch eine Lochdüse zu endlosen Strängen ausgetragen, über ein Kühlbad abgekühlt und mittels eines Stranggranulators zu einzelnen Stückchen granuliert. Die zylindrischen Granulate hatten einen Durchmesser von ca. 0,8 mm und eine Länge von ca.10,0 mm. Das Granulat wurde anschließend auf eine Dichte von 15 kg / m³ geschäumt. Nach 24stündiger Konditionierung wurden daraus Blöcke gepresst und mittels Heißdraht zu 50 mm dicken Platten geschnitten. Die so hergestellten Platten hatten eine durchschnittliche Wärmeleitzahl von 32 mW/m·K.

### Beispiel 2

Polystyrol gemäß Beispiel 1 wurde in einem Extruder zusammen mit 3,0 Gew.% kalziniertem Petrolkoks, hergestellt auf einer Gegenstrahlmühle, mit einem mittleren Teilchendurchmesser von 4,0 µm und einem Aspektverhältnis von 35, mit 0,8 Gew.% Hexabromcyclododecan und 0,1 Gew.% Dicumyl aufgeschmolzen, mit 7,0 Gew.% Pentan versetzt und gemäß Beispiel 1 abgekühlt. Die Polymerschmelze wurde über eine Lochdüse zu endlosen Strängen mit 0,75 mm Durchmesser ausgetragen und mittels einer druckbeaufschlagten Unterwassergranulierung zu kompakten Granulaten mit einer sehr engen Größenverteilung granuliert. Die Granulate wurden gem. Beispiel 1 auf eine Dichte von 15 kg/m³ verschäumt und weiterverarbeitet. Die Platten hatten eine Wärmeleitzahl von 31 mW/m·K.

### Beispiel 3

In einem wässrigen Suspensionspolymerisationsverfahren nach dem bekannten Stand der Technik wurden bezogen auf die Styrolkomponenten 2 Gew.% Petrolkoks hergestellt auf einer Spiralstrahlmühle, mit einem mittleren Teilchendurchmesser von 3,0 µm und einem Aspektverhältnis von 45 eingemischt und zusammen mit 1,5 Gew.% Hexabromcyclododecan als Flammschutzmittel sowie Pentan als Schaummittel peroxidisch polymerisiert. Die nach dem Abtrennen der wässrigen Phase erhaltenen Perlen hatten einen mittleren Durchmesser von 0,8 mm. Nach dem Verschäumen der Perlen mit Wasserdampf zu Platten mit einer Dichte von 14,5 kg/m³ konnte eine Wärmeleitzahl von 33 mW/m·K. bestimmt werden.

### Beispiel 4

In einem kontinuierlich arbeitenden Extruder wird Polystyrol mit einem Molekulargewicht von 220.000 g/mol zusammen mit 1,0 Gew.% Hexabromcyclododecan und 0,2 Gew.% Dicumyl sowie 3,8 Gew.% kalziniertem Petrolkoks, hergestellt auf einer Gegenstrahlmühle, mit einem mittleren Teilchendurchmesser von 4,0 µm und einem Aspektverhältnis von 35, aufgeschmolzen. Die Verschäumung wurde direkt im Extruder auf die Enddichte vorgenommen. Der Polystyrolschaum wurde über eine Breitschlitzdüse endlos ausgetragen und abgekühlt. Die Formteile hatten eine Dichte von 14 kg/m³ und eine Wärmeleitzahl von 31 mW/m·K.

Die petrolkokshaltigen Formkörper gemäß den Beispielen 1-3 konnten als schwerentflammbar nach DIN 4102 - B1 eingestuft werden.

## Patentansprüche

1. Körper, insbesondere Formkörper, aus Polystyrol, insbesondere aus Polystyrolpartikelschaum oder Polystyrolhartschaum, wobei das Polystyrol, insbesondere der Polystyrolpartikelschaum oder der Polystyrolhartschaum, Koks, insbesondere Koks-Teilchen, enthält,
**dadurch gekennzeichnet, dass**
der Koks ein kalzinierter Petrolkoks, insbesondere kalzinierte Petrolkoks-Teilchen, ist und die Petrolkoks-Teilchen oder mindestens ein Teil der Petrolkoks-Teilchen eine plättchenförmige Kornform aufweisen.

2. Körper nach Anspruch 1,
**dadurch gekennzeichnet, dass**
der Petrolkoks, insbesondere die Petrolkoks-Teilchen, im Polystyrolpartikelschaum oder Polystyrolhartschaum homogen verteilt sind.

3. Körper nach einem der vorhergehenden Ansprüche,
**dadurch gekennzeichnet, dass**
der Petrolkoks isotrop oder anisotrop ausgebildet ist.

4. Körper nach einem der vorhergehenden Ansprüche,
**dadurch gekennzeichnet, dass**
der Petrolkoks als Nadelkoks ausgebildet ist.

5. Körper nach einem der vorhergehenden Ansprüche,
**dadurch gekennzeichnet, dass**
die Petrolkoks-Teilchen eine mittlere Partikelgröße von 1 µm - 50 µm, vorzugsweise von 1 µm - 10 µm, aufweisen.

6. Körper nach einem der vorhergehenden Ansprüche,
**dadurch gekennzeichnet, dass**
die Petrolkoks-Teilchen ein Aspektverhältnis von 1 - 500, vorzugsweise von 5 - 50, aufweisen.

7. Körper nach einem der vorhergehenden Ansprüche,
**dadurch gekennzeichnet, dass**
der Petrolkoks in einer Menge von 0,5 Gew.% - 10 Gew.% bezogen auf den fertigen Körper enthalten ist.

8. Körper nach einem der vorhergehenden Ansprüche,
**dadurch gekennzeichnet, dass** der Körper eine Dichte von weniger als 40 kg/m³ aufweist.

9. Körper nach einem der vorhergehenden Ansprüche,
**dadurch gekennzeichnet, dass**
der Körper eine Wärmeleitzahl von 20 mW/(m·K) - 40 mW/(m·K), insbesondere von 25 mW/(m·K) - 30 mW/(m·K), aufweist.

10. Verfahren zur Herstellung eines Körpers nach mindestens einem der vorhergehenden Ansprüche,
**dadurch gekennzeichnet, dass**
die Petrolkoks-Teilchen in delaminierend arbeitenden Mühlen gemahlen wurden.

11. Verfahren nach Anspruch 10,
**dadurch gekennzeichnet, dass**
die Petrolkoks-Teilchen in Kugelmühlen gemahlen wurden.

12. Verfahren nach Anspruch 10,
**dadurch gekennzeichnet, dass**
die Petrolkoks-Teilchen in Luftstrahlmühlen gemahlen wurden.

## Claims

1. Body, in particular a moulded body, made of polystyrene, in particular made of polystyrene particle foam or polystyrene rigid foam, wherein the polystyrene, in particular the polystyrene particle foam or the polystyrene rigid foam, contains coke, in particular coke particles,
**characterized in that**
the coke is a calcined petroleum coke, in particular calcined petroleum coke particles, and the petroleum coke particles or at least some of the petroleum coke particles exhibit a platelet-like grain shape.

2. Body according to Claim 1,
**characterized in that**
the petroleum coke, in particular the petroleum coke particles, are distributed homogeneously in the polystyrene particle foam or polystyrene rigid foam.

3. Body according to either preceding claim,
**characterized in that**
the petroleum coke is isotropic or anisotropic.

4. Body according to any preceding claim,
**characterized in that** the petroleum coke is needle coke.

5. Body according to any preceding claim,
**characterized in that**
the petroleum coke particles exhibit an average particle size of 1 µm - 50 µm, preferably of 1 µm - 10 µm.

6. Body according to any preceding claim,
**characterized in that**
the petroleum coke particles exhibit an aspect ratio of 1 - 500, preferably of 5 - 50.

7. Body according to any preceding claim,
**characterized in that**
the petroleum coke content is in the range of 0.5% by weight - 10% by weight based on the final body.

8. Body according to any preceding claim,
**characterized in that**
the body has a density of less than 40 kg/m³.

9. Body according to any preceding claim,
**characterized in that**
the body has a thermal conductivity coefficient of 20 mW/(m·K) - 40 mW/(m·K), in particular of 25 mW/(m·K) - 30 mW/(m·K).

10. Process for producing a body according to at least one of the preceding claims,
**characterized in that**
the petroleum coke particles were ground in delamination mills.

11. Process according to Claim 10,
**characterized in that**
the petroleum coke particles were ground in ball mills.

12. Process according to Claim 10,
**characterized in that**
the petroleum coke particles were ground in air jet mills.

## Revendications

1. Corps, en particulier corps moulé, à base de polystyrène, en particulier à base de mousse de particules de polystyrène ou de mousse rigide de polystyrène, le polystyrène, en particulier la mousse de particules de polystyrène ou la mousse rigide de polystyrène, contenant du coke, en particulier des particules de coke,
**caractérisé en ce que**
le coke est un coke de pétrole calciné, en particulier des particules de coke de pétrole calciné, et les particules de coke de pétrole ou au moins une partie des particules de coke de pétrole ont une forme de grain en paillettes.

2. Corps selon la revendication 1,
**caractérisé en ce que**
le coke de pétrole, en particulier les particules de coke de pétrole, sont répartis de façon homogène dans la mousse de particules de polystyrène ou la mousse rigide de polystyrène.

3. Corps selon l'une quelconque des revendications précédentes,
**caractérisé en ce que**
le coke de pétrole a une constitution isotrope ou anisotrope.

4. Corps selon l'une quelconque des revendications précédentes,
**caractérisé en ce que**
le coke de pétrole est constitué de coke aciculaire.

5. Corps selon l'une quelconque des revendications précédentes,
**caractérisé en ce que**
les particules de coke de pétrole ont une taille moyenne de particule de 1 pm - 50 µm, de préférence de 1 µm - 10 µm.

6. Corps selon l'une quelconque des revendications précédentes,
**caractérisé en ce que**
les particules de coke de pétrole présentent un rapport de forme de 1 - 500, de préférence de 5 - 50.

7. Corps selon l'une quelconque des revendications précédentes,
**caractérisé en ce que**
le coke de pétrole est contenu en une quantité de 0,5 % en poids - 10 % en poids par rapport au corps fini.

8. Corps selon l'une quelconque des revendications précédentes,
**caractérisé en ce que**
le corps présente une densité inférieure à 40 kg/m².

9. Corps selon l'une quelconque des revendications précédentes,
**caractérisé en ce que**
le corps présente un indice de conductivité thermique de 20 mW/(m·K) - 40 mW/(m·K), en particulier de 25 mW/(m·K) - 30 mW/(m·K).

10. Procédé pour la production d'un corps selon au moins l'une quelconque des revendications précédentes,
**caractérisé en ce que**
les particules de coke de pétrole ont été broyées dans des broyeurs fonctionnant par délaminage.

11. Procédé selon la revendication 10,
**caractérisé en ce que**
les particules de coke de pétrole ont été broyées dans des broyeurs à boulets.

12. Procédé selon la revendication 10,
**caractérisé en ce que**
les particules de coke de pétrole ont été broyées dans des broyeurs à jet d'air.
